# EUROPÄISCHE PATENTSCHRIFT

(11) **EP 3 717 434 B1**
(45) Veröffentlichungstag und Bekanntmachung des Hinweises auf die Patenterteilung: **12.10.2022**
(21) Anmeldenummer: 18804568.6
(22) Anmeldetag: 15.11.2018
(51) Int. Cl.: C03C 23/00, C03C 21/00

(54) **VERFAHREN ZUR HERSTELLUNG EINES GLASARTIKELS**
METHOD FOR PRODUCING A GLASS ARTICLE
PROCÉDÉ DE FABRICATION D'UN ARTICLE EN VERRE

(30) Priorität: 30.11.2017 DE 102017128413
(43) Veröffentlichungstag der Anmeldung: 07.10.2020
(73) Patentinhaber: SCHOTT AG, 55122 Mainz (DE)
(72) Erfinder: GLACKI, Alexander, 30173 Hannover (DE); HENZE, Inka, 55268 Nieder-Olm (DE); MOSELER, Doris, 55257 Budenheim (DE); STÖHR, Ulrike, 55127 Mainz (DE); BRACK, Heike, 55257 Budenheim (DE)
(74) Vertreter: Schott Corporate IP
(86) Internationale Anmeldenummer: PCT/EP2018/081299
(87) Internationale Veröffentlichungsnummer: WO 2019/105741

(56) Entgegenhaltungen:
- WO-A2-2011/029857
- US-A- 2 377 062
- US-A1- 2012 277 085
- US-A1- 2017 008 797
- US-B1- 6 280 849

## Beschreibung

Die Erfindung betrifft ein Verfahren zur Herstellung eines Glasartikels.

Oberflächen von frisch geformten Glasartikeln sind aufgrund hoher Oberflächenenergien stumpf und deshalb stark anfällig für Oberflächendefekte wie Kratzer, Risse, Brüche und Checks. Ferner neigen frisch geformte Glasartikel zu Sticking, das heißt sie haften leicht aneinander. Die stumpfe Oberfläche kann dazu führen, dass es bei der Weiterverarbeitung der Glasartikel zu Beschädigungen der Oberfläche wie Kratzern kommt, was dann auch zu erhöhtem Glasbruch und damit auch zu einer Glaspartikelbildung und einer Partikelverunreinigung der hergestellten Glasartikel führen kann.

In der Behälterglasindustrie kommen daher häufig sogenannte Heißend- und Kaltendvergütungen bzw. Beschichtungen zum Einsatz, um die Glasoberfläche unempfindlicher gegen Schäden zu machen. Hierbei wird auf dem Glas eine Beschichtung mit Fremdstoffen aufgetragen, welche Metalloxide und organische Verbindungen wie Wachsemulsionen umfassen können. Derartige Heißend- und Kaltendvergütungen kommen jedoch für die Herstellung pharmazeutischer Primärpackmittel aufgrund der eingebrachten Verunreinigungen der Glasartikel nicht in Betracht.

Alternativ werden frische Glasprodukte über einen Zeitraum von mindestens zehn Tagen bis zu mehreren Monaten gelagert, wobei sich zunehmend eine abgesättigte Oberfläche ausbildet, welche deutlich unempfindlicher gegenüber Beschädigungen der Oberfläche ist. Die Gefahr von Bruch, Kratzern und Materialschäden in weiterverarbeitenden Prozessen wie Waschen, Bedruckung- oder Beschichtungsprozessen wird dadurch vermindert.

Insbesondere bei der Fertigung pharmazeutischer Primärpackmittel aus Glas entstehen durch die Empfindlichkeit der Glasoberfläche nach der Heißformgebung sowohl am Glasprodukt als auch während dessen Herstellungsprozess negative Auswirkungen. Werden die Produkte ohne Zwischenlagerung, das heißt ohne natürliche Absättigung der Glasoberfläche weiterverarbeitet, kann es durch Glas-Glas-Kontakt, also zum Beispiel Kontakt mit weiteren gleichartigen Glasartikeln oder Kontakt des Glases zu Werkzeugen, Greifern, Auflagen oder Transportbändern zu Defekten kommen. Werden Produkte lange abgelagert, nimmt zwar deren Empfindlichkeit ab, allerdings entsteht auf der Produktoberfläche ein weitestgehend undefinierter und für den Pharmazeuten unerwünschter organischer Belag. Die natürliche Absättigung der Glasoberfläche ist aber stark zeit- und umgebungsabhängig. So dauert die Absättigung der Glasoberfläche bei Lagerung bei tiefen Temperaturen in der Regel deutlich länger als bei höheren Temperaturen. Außerdem bedeutet die Zwischenlagerung eines Glasproduktes vor der Weiterverarbeitung einen hohen logistischen Aufwand.

Auch durch Waschprozesse, bei denen einem Glasartikel große Mengen von Wasser und / oder weiteren Chemikalien zugeführt werden, kann die Oberfläche von Glasartikeln so verändert werden, dass der Gleitreibungskoeffizient µ reduziert wird. Waschprozesse bedeuten jedoch ebenfalls einen hohen Fertigungsaufwand können nicht ohne erheblichen Zusatzaufwand auf die Außenoberfläche eines Glasartikels beschränkt werden. Bei Waschprozessen von Containern besteht daher grundsätzlich die Gefahr der Verunreinigung der Außenoberfläche, insbesondere aber auch die Gefahr der Verunreinigung der Innenoberfläche. Insbesondere bewirkt aber jeder Waschprozess eine chemische Veränderung der Glasoberfläche, insbesondere kommt es bekannter Weise zu einem Auswaschen von Alkalien wie Natrium und Kalium, sowie Lithium soweit es in dem Glas vorhanden ist.

US 2017/0008797 A1 befasst sich mit einem speziellen Verfahren zur Passivierung der Innenoberfläche einer Glasflasche.

US 2 377 062 A befasst sich mit einem speziellen Verfahren zur Entfernung von wasserlöslichen Komponenten aus Glasoberflächen.

Aufgabe der vorliegenden Erfindung ist es daher, ein Verfahren für die Herstellung von Glasartikeln bereitzustellen, bei welchem Oberflächendefekte wie Kratzer und insbesondere Glasbruch weitestgehend vermieden werden und wobei außerdem eine Zwischenlagerung oder ein Waschprozess der Glasartikel vermieden werden soll. Des Weiteren sollen die Glasartikel bei dem Verfahren auch nicht mit anorganischen, organischen Fremdmaterialien oder Glaspartikeln beaufschlagt bzw. verunreinigt werden. Letztlich sollen sämtliche Veränderungen des Glasartikels ausgeschlossen werden, welche sich auf seine Verwendbarkeit als pharmazeutisches Primärpackmittel negativ auswirken könnten.

Die Aufgabe wird gelöst durch den unabhängigen Anspruch. Bevorzugte Ausführungsformen sind in den abhängigen Ansprüchen ausgeführt.

Das erfindungsgemäße Verfahren zur Herstellung eines Glasartikels umfasst in dieser Reihenfolge einen ersten Prozessschritt A, bei welchem eine Oberfläche des Glasartikels zumindest zeitweise eine Temperatur von wenigstens 400°C aufweist, einen zweiten Prozessschritt B, wobei die Oberfläche des Glasartikels eine Temperatur von mehr als 5°C und weniger als 100°C aufweist und die Oberfläche mit Wasser oder Wasserdampf beaufschlagt wird und wobei der Oberfläche des Glasartikels eine Wassermenge zugeführt wird, welche einer Wasserschichtdicke von 1 bis 100 µm entspricht, und einen dritten Prozessschritt C, wobei der Glasartikel unter Kontakt der Oberfläche mit Fremdmaterialien oder anderen Glasartikeln weiterverarbeitet wird.

Überraschender Weise hat sich gezeigt, dass die Oberfläche eines Glasartikels, welche zuvor zumindest zeitweise auf eine Temperatur von 400°C erhitzt worden ist, durch kurze Beaufschlagung mit Wasser oder Wasserdampf bereits so verändert werden kann, dass die Empfindlichkeit der Oberfläche deutlich reduziert werden kann. Die Neigung der Glasartikel zu Kratzerbildung, Rissen und Aneinanderhaften ist deutlich reduziert.

Der Glasartikel kann dabei ein Glasartikel beliebiger Form wie z.B. Hohlglas, Flachglas, oder auch Glas in Barren-, Rohr- oder auch Stabform sein.

Bei dem ersten Prozessschritt A kann es sich um einen beliebigen Prozess handeln, bei welchem die Glasoberfläche kurzfristig einer Temperatur von wenigstens ca. 400°C aufweist gesetzt ist. Es kann sich z.B. um einen Kühlprozess zum Entspannen handeln, wie er bei der Herstellung der meisten Glasartikel erfolgt, oder auch einen thermischen Vorspannprozess. Ebenso kann es sich um einen Formgebungsprozess handeln, bei welchem der Glasartikel aus einer Schmelze urgeformt wird oder aus einem Zwischenprodukt wie einem Glasrohr umgeformt wird.

Bei dem zweiten Prozessschritt B weist zumindest die zu behandelnde Oberfläche des Glasartikels eine Temperatur zwischen 5° C und 100 °C auf. Die Oberfläche wird mit einer geringen Menge Wasser in flüssiger und/oder gasförmiger Form beaufschlagt, wobei die Wassermenge so eingestellt wird, dass sie bezogen auf den flüssigen Aggregatszustand einer Schichtdicke von 1 bis 100 µm auf der zu behandelnden Oberfläche des Glasartikels entspricht. Bei der gesamten eingesetzten Wassermenge ist also zu berücksichtigen, welche Oberfläche der zu behandelnde Glasartikel aufweist und welcher Anteil des Wassers in Abhängigkeit des gewählten Auftragsverfahrens die Oberfläche des Glasartikels erreicht. Bei einem Aufsprühen des Wassers auf die Oberfläche des Glasartikels kann eine typische eingesetzte Wassermenge zum Beispiel 0,02 nl je cm² Oberfläche des Glasartikels betragen, entsprechend einer Belegung der Oberfläche mit 20 µm Wasser.

Bei dem dritten Prozessschritt C kann es sich um einen Weiterverarbeitungsprozess im allgemeinsten Sinne handeln, z.B. einen Förderprozess, bei welchem der Glasartikel unter Kontakt der Oberfläche mit Fremdmaterialien oder anderen Glasartikeln transportiert wird, einen Beschichtungsprozess, einen Verpackungsprozess oder jede Art von Prozess, der eine Berührung des Glasartikels z.B. mittels Greifern erfordert. Bevorzugt handelt es sich um einen sogenannten Kaltprozess, bei welchem die Oberfläche des Glasartikels nicht über eine Temperatur von ca. 200 bis 300 °C angehoben wird.

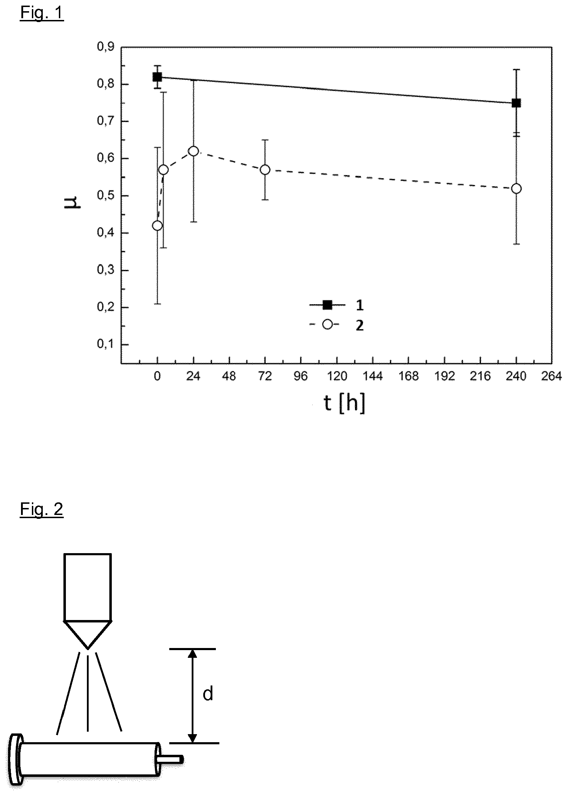

Wie die Erfinder herausgefunden haben, unterscheidet sich das Verhalten der erfindungsgemäß behandelten Oberfläche überraschenderweise deutlich von einer natürlich abgesättigten Oberfläche. So wird gemäß Figur 1 beobachtet, dass der Gleitreibungskoeffizient µ nach einer erfindungsgemäßen Beaufschlagung mit Wasser oder Wasserdampf zu einem Zeitpunkt t = 0 nach der Behandlung sehr stark abgesenkt wird, anschließend aber in einem Zeitraum von 24 h wieder leicht ansteigt, während der Gleitreibungskoeffizient µ bei natürlicher Absättigung der Oberfläche einfach monoton abfällt. Auch nach 24 h liegt der Gleitreibungskoeffizient µ der erfindungsgemäß behandelten Glasartikel jedoch noch deutlich unter dem Gleitreibungskoeffizienten µ von unbehandelten Proben. Somit sollte die Weiterverarbeitung der Glasartikel möglichst innerhalb von 4 Stunden, bevorzugt innerhalb von einer Stunde und besonders bevorzugt innerhalb von weniger als 10 Minuten nach Abschluss des zweiten Prozessschrittes B erfolgen.

Die Erfinder haben weiterhin festgestellt, dass der Gleitreibungskoeffizient µ überraschenderweise mit der Empfindlichkeit der Glasoberfläche bei Glas-Glas-Kontakt korreliert.

Der Gleitreibungskoeffizient µ wird für Glasartikel mit einem zylinderförmigen Glaskörper wie beispielsweise Spritzen, Fläschchen, Karpulen, Ampullen gemessen, indem in einem definierten Messaufbau ein erster Zylinder-Glaskörper in horizontaler Orientierung fixiert wird und ein zweiter gleichartiger Zylinder-Glaskörper, der horizontal und rechtwinklig zu dem ersten Zylinder-Glaskörper angeordnet ist, mit einer Geschwindigkeit von 10 mm/min und einer konstanten Anpresskraft F_{N} von 0,5 N über eine Länge von 15 mm über die zylindrische Oberfläche des ersten Zylinder-Glaskörpers gerieben wird. Während der Bewegung des zweiten Zylinder-Glaskörpers wird die Reibungskraft F_{R} gemessen. Aufgrund der zylindrischen Wölbung der Glasoberflächen, sowie der Verkippung der Achsen der beiden Container zueinander, stehen die Glasartikel während der Messung in einem punktförmigen Kontakt zueinander. Der Gleitreibungskoeffizient ergibt sich über die Formel µ = F_{R}/ F_{N} Es ist darauf hinzuweisen, dass der Gleitreibungskoeffizient µ eines Glasartikels mit diesem Messverfahren immer relativ zu einem gleichartigen Glasartikel bestimmt wird. Das Messverfahren trägt dabei besonders dem Fall Rechnung, dass sich Glasartikel gegenseitig berühren, wie es bei vielen Fertigungsprozessen der Fall ist. Der Gleitreibung eines Glasartikels in Verbindung mit anderen Reibpartnern wie Metallen, Keramiken oder Kunststoffen korreliert aber mit dem erfindungsgemäß bestimmten Gleitreibungskoeffizienten µ und es kann davon ausgegangen werden, dass ein erhöhter Gleitreibungskoeffizient µ auch zu einer erhöhten Gleitreibung eines Glasartikels in Verbindung mit anderen Reibpartnern wie Metallen, Keramiken oder Kunststoffen führt. Durch das erfindungsgemäße Verfahren kann der Gleitreibungskoeffizient µ für zylindrische Spritzenkörper aus einem Typ 1b Borosilikatglas wie Schott Fiolax^{®} zum Beispiel von 0,82 sehr schnell auf 0,42 abgesenkt werden. Unbehandelte Glasspritzen mit einem Gleitreibungskoeffizienten µ von 0,82 kurz nach ihrer Herstellung weisen hingegen 10 Tage nach ihrer Herstellung noch einen Gleitreibungskoeffizienten µ von 0,75 auf. Somit können mit dem erfindungsgemäßen Verfahren hergestellte Glasspritzen nach ihrer Formgebung und Tempern in einem Kühlofen unter Verwendung des erfindungsgemäßen Verfahrens direkt weiterverarbeitet werden, ohne dass es zu Oberflächendefekten wir Kratzern, Rissen oder Bruch kommt.

Auf dem ersten Zylinder-Glaskörper, welcher bei diesem Vorgang fest auf seiner Position fixiert ist, kann außerdem das Schadensbild analysiert werden, welches durch den Messvorgang entstanden ist.

In einer bevorzugten Ausführungsform weist die Oberfläche des Glasartikels im zweiten Prozessschritt B eine Temperatur von weniger als 60°C auf. Besonders vorteilhaft kann Prozessschritt B erfolgen, wenn der Glasartikel ausgehend von Prozessschritt A abkühlt. Wenn die Temperatur ca. 60°C beträgt, lässt sich der Glasartikel schon gut mit Wasser beaufschlagen, ohne dass es zu einer stärkeren Verdampfung kommt. Auf der anderen Seite weist der Glasartikel noch eine sehr frische Glasoberfläche auf. Dadurch ist eine gleichmäßige Behandlung der Oberfläche des Glasartikels möglich. Bei Temperaturen oberhalb von 100 °C wird die Oberfläche nicht mehr ausreichend abgesättigt, wodurch der gewünschte Effekt nicht eintritt.

In einer bevorzugten Ausführungsform weist die Oberfläche des Glasartikels im zweiten Prozessschritt B eine Temperatur von mehr als 10°C, bevorzugt mehr als 20°C und besonders bevorzugt mehr als 30°C auf. Die Oberfläche des Glasartikels kann beispielsweise der Umgebungstemperatur entsprechen. Bevorzugt ist aber eine gegenüber der Umgebungstemperatur angehobene Temperatur, da die Oberfläche des Glasartikels bei höherer Temperatur reaktiver ist und überschüssiges Wasser schneller von der Oberfläche des Glasartikels verdunstet.

In einer bevorzugten Ausführungsform erfolgt der dritte Prozessschritt C innerhalb von 4 Stunden, bevorzugt innerhalb von einer Stunde und besonders bevorzugt innerhalb von weniger als 10 Minuten nach Abschluss des zweiten Prozessschrittes B.

In einer bevorzugten Ausführungsform erfolgt die Beaufschlagung der Oberfläche mit Wasser über einen Zeitraum von weniger als 60 s, bevorzugt weniger als 10 s und besonders bevorzugt 0,1 s bis 2 s. Die Erfinder haben festgestellt, dass zum Erreichen des erfindungsgemäßen Effektes schon eine sehr kurze Behandlungsdauer von 0,1 s bis 2 s ausreichend ist. Längere Behandlungszeiten wirken sich dabei nicht unbedingt negativ aus, stehen jedoch im Allgemeinen im Widerspruch zu einem wirtschaftlichen Herstellungsprozess mit hohen Taktraten.

In einer bevorzugten Ausführungsform weist der Gleitreibungskoeffizient µ der Oberfläche vor dem zweiten Prozessschritt B einen Wert µ₁ und direkt nach dem zweiten Prozessschritt einen Wert µ₂ auf, wobei gilt: (µ₁ - µ₂) /µ₁ > 0,1, bevorzugt (µ₁ - µ₂) /µ₁ > 0,2 und mehr bevorzugt (µ₁ - µ₂) /µ₁ > 0,3. Hierbei ist unter "direkt nach dem zweiten Prozessschritt B" zu verstehen, dass nach der Beaufschlagung mit Wasser oder Wasserdampf zumindest ein Abtrocknen der Oberfläche erfolgt und dann der Gleitreibungskoeffizient µ messtechnisch ermittelt wird. Ebenso kann die Abkühlung des Glasartikels auf weniger als ca. 30°C bzw. auf Raumtemperatur abgewartet werden. Der Messung des Gleitreibungskoeffizienten µ direkt nach dem zweiten Prozessschritt B erfolgt somit typischerweise 1 Minute bis 15 Minuten nach dem Prozessschritt B. Für Spritzenkörper aus Typ I Borosilikatglas der Marke Schott Fiolax^{®} wurde zum Beispiel ein Wert (µ₁ - µ₂) /µ₁ = 0,48 erreicht, also ungefähr eine Halbierung des Gleitreibungskoeffizienten µ.

In einer weiteren bevorzugten Ausführungsform weist der Gleitreibungskoeffizient µ der Oberfläche vor dem zweiten Prozessschritt B einen Wert µ₁ > 0,7 auf und direkt nach dem zweiten Prozessschritt B einen Wert µ₁ < 0,5. Liegt der Gleitreibungskoeffizient über 0,6 bis 0,7, so weisen die Glasartikel eine hohe Kratzerempfindlichkeit auf, bei Werten des Gleitreibungskoeffizienten unter 0,5 werden bei Glas-Glas-Kontakt überraschenderweise kaum noch gegenseitige Oberflächendefekte beobachtet.

In einer bevorzugten Ausführungsform ist die chemische Veränderung des Glasartikels nach dem zweiten Prozessschritt B auf eine Oberflächenschicht einer Dicke von < 50 nm, bevorzugt < 10 nm beschränkt. Das erfindungsgemäße Verfahren zeichnet sich also dadurch aus, dass der Glasartikel nur in einer extrem dünnen Oberflächenschicht chemisch verändert wird. Dies wird insbesondere durch die geringen Temperaturen der Glasoberfläche beim Beaufschlagen mit Wasser oder Wasserdampf erreicht, sowie auch durch die geringen Einwirkdauern. Es kommt somit nicht zu unerwünschten Effekten wie einer Diffusion von Wasser in tiefere Bereiche des Glasartikels sowie auch nicht zu einer oberflächlichen Alkalien-Auslaugung des Glases, wie Wasser sie bei längeren Einwirkdauern bewirken.

In einer bevorzugten Ausführungsform führt der zweite Prozessschritt B nicht zu chemischen Veränderungen in einer tiefergelegenen Schicht des Glasartikels, welche sich von einem Abstand von 50 nm unterhalb der Glasoberfläche in den Glasartikel hinein erstreckt. Da es durch den zweiten Prozessschritt nicht zu unerwünschten Effekten wie einer Diffusion von Wasser in das Glasinnere sowie auch nicht zu einer Auslaugung des Glasinneren kommt, wird das Glasinnere in seinen chemischen Eigenschaften nicht verändert. Unerwünschte Auswirkungen des erfindungsgemäßen Verfahrens zum Beispiel auf nachfolgende Formgebungsprozesse können so vermieden werden.

In einer bevorzugten Ausführungsform können die Veränderungen der Oberfläche durch den zweiten Prozessschritt B durch eine Temperaturbehandlung rückgängig gemacht werden. Nach erneuter Durchführung eines Prozessschrittes gemäß Prozessschritt A, bei welchem eine Oberfläche des Glasartikels eine Temperatur von wenigstens 400°C aufweist, werden die Oberflächeneigenschaften also weitestgehend wieder auf die Oberflächeneigenschaften einer frisch hergestellten Glasoberfläche zurückgesetzt. Es entsteht eine nicht abgesättigte Glasoberfläche mit hoher Sensitivität und Kratzerempfindlichkeit. Der Gleitreibungskoeffizient µ wird wieder angehoben. Auch verbleiben keine Rückstände oder Verunreinigungen, die durch den Prozessschritt B eingebracht worden sind, auf der Glasoberfläche. Das erfindungsgemäße Verfahren ist also weitestgehend reversibel.

In einer bevorzugten Ausführungsform wird im zweiten Prozessschritt die Oberfläche des Glasartikels ausschließlich mit Wasser oder Wasserdampf beaufschlagt, bevorzugt mit destilliertem Wasser oder WFI (water for injection). Es wird also Wasser möglichst hoher Reinheit in flüssiger Form oder als Dampf eingesetzt, welches keinerlei Zusatzstoffe und keinerlei Verunreinigungen mit organischen oder anorganischen Stoffen aufweist. So kann z.B. Wasser in einer der Qualitäten Reinstwasser, destilliertes Wasser, WFI eingesetzt werden. Weiter bevorzugt weist das Wasser eine Leitfähigkeit von weniger als 10 µS, bevorzugt weniger als 5 µS und besonders bevorzugt weniger als 0,5 bis 0,01 µS auf. Zwar wird mit dem erfindungsgemäßen Verfahren auch mit üblichem Leitungswasser eine deutliche Reduzierung des Gleitreibungskoeffizienten erreicht, Verunreinigungen der Glasoberfläche wie z.B. Kalkablagerungen o.ä. können so aber vermieden werden.

In einer bevorzugten Ausführungsform wird dem Glasartikel eine Wassermenge zugeführt, welche einer Wasserschichtdicke von 5 bis 50 µm und bevorzugt 10 bis 30 µm auf der Oberfläche des Glasartikels entspricht. Die Erfinder haben herausgefunden, dass die benötigte Wassermenge überraschenderweise deutlich größer ist, als die Dicke der sich auf dem Glasartikel bildenden Oberflächenschicht. Die Wassermenge wird also abhängig von der Oberfläche des Glasartikels zur Verfügung gestellt. Eine optimale Absenkung des Gleitreibungskoeffizienten µ konnte mit einer Wassermenge erreicht werden, welche einer Schichtdicke von wenigstens 10 µm entspricht. Größere Wassermengen haben nicht mehr zu einer weiteren Absenkung des Gleitreibungskoeffizienten µ geführt, und verlängern lediglich die Prozessdauer sowie die Gefahr, den Glasartikel zu verunreinigen oder Anlagenteile durch überschüssiges und vom Glas abtropfendes Wasser zu verunreinigen.

In einer bevorzugten Ausführungsform erfolgt die Beaufschlagung mit Wasser oder Luft-Wassergemisch mittels Aufsprühen oder mit Wasserdampf mit feuchter, warmer Luft, welche eine höhere Temperatur als der Glasartikel aufweist. Wasser oder ein Luft-Wasser-Gemisch können mit Hilfe wenigstens einer Sprühdüse besonders effizient und gerichtet auf den Glasartikel aufgesprüht werden. Dabei kann die Düsengeometrie so an den Glasartikel angepasst werden, dass die gesamte Oberfläche möglichst gleichmäßig eingesprüht wird. Um die gesamte Oberfläche des Glasartikels zu erreichen, können mehrere Sprühdüsen um den Glasartikel herum angeordnet sein. Ebenso kann eine Drehbewegung des Glasartikels unter einer Sprühdüse bevorzugt um seine Längsachse erfolgen, wodurch die Anzahl der benötigten Sprühdüsen geringgehalten werden kann.

Ebenso kann dem Glasartikel mit Wasserdampf gesättigte warme Luft zugeführt werden, welche bevorzugt eine höhere Temperatur als der Glasartikel aufweist, so dass auf den Glasartikel auftreffende Luft abkühlt und der Wasserdampf auf dem Glasartikel kondensiert. Die mit Wasserdampf gesättigte warme Luft kann ebenfalls über eine Düse oder auch eine großflächige Luftströmung dem Glasartikel zugeführt werden. Dieses Verfahren bietet sich besonders dann an, wenn nicht die gesamte Oberfläche des Glasartikels mit Sprühdüsen erreichbar ist.

In einer bevorzugten Ausführungsform erfolgt die Beaufschlagung mit Wasser oder Wasserdampf durch Beaufschlagung mit zerstäubtem Wasser, bevorzugt mit Hilfe eines Ultraschall-Zerstäubers. Die Zerstäubung des Wassers mit Hilfe eines Ultraschall-Zerstäubers zeichnet sich durch einen geringen Energiebedarf und eine geringe Erwärmung des Wassers aus, so dass bei dieser Art der Zuführung des Wassers auch eine besonders hohe Kühlwirkung erzielt wird. Außerdem lässt sich das durch US-Zerstäuber zerstäubte Wasser in einer Fertigung sicherer und mit geringerem Verletzungsrisiko als heißer Dampf einsetzen.

In einer bevorzugten Ausführungsform ist der Glasartikel ein Hohlkörper, bevorzugt ein Hohlkörper aus einem Borosilikatglas vom Typ I oder Typ II gemäß der European Pharmacopeia 8.4, Abschnitt 3.2.1, oder ein Alumosilikatglas, welches einen Al₂O₃-Gehalt im Bereich von 8 bis 23 wt-% aufweist. Der Körper kann eine thermische oder auch chemische mechanische Vorspannung aufweisen, wie sie zur Erhöhung der mechanischen Festigkeit im Stand der Technik bekannt ist.

In einer bevorzugten Ausführungsform ist der Glasartikel eine Pharmaprimärverpackung, bevorzugt ein Fläschchen, eine Spritze, eine Karpule oder eine Ampulle. An derartige Pharmaprimärverpackungen werden bezüglich Verunreinigungen und kosmetischen Defekten wie zum Beispiel Kratzern und Rissen besonders hohe Anforderungen gestellt. Nach dem Abfüllen von Medikamenten in die Container erfolgt in der Regel eine Qualitätskontrolle auf Partikelverunreinigungen, welche durch jegliche kosmetische Defekte der Pharmaprimärverpackung erschwert wird und wobei kosmetische Defekte der Pharmaprimärverpackung sogar zu einer Einstufung als Ausschuss führen können. Das erfindungsgemäße Verfahren wird daher besonders bevorzugt für die Herstellung von Pharmaprimärverpackungen wie Fläschchen, Spritzen, Karpulen oder Ampullen eingesetzt.

In einer bevorzugten Ausführungsform umfassen im dritten Prozessschritt C die Fremdmaterialien oder anderen Glasartikel im Kontaktierungsbereich mit der Oberfläche des Glasartikels Metall, Glas, Polymere oder keramische Werkstoffe. Metalle, Glas und keramische Werkstoffe sind aufgrund ihrer hohen Härte besonders kritische Kontaktwerkstoffe für frisch geformte Glasoberflächen. Während es bei unbehandelten frischen Glasoberfläche, welche in Kontakt mit Metall, Glas oder Keramik gebracht werden, regelmäßig zu Oberflächenverletzungen kommt, insbesondere wenn der Kontaktwerkstoff ebenfalls eine stumpfe, raue Oberfläche aufweist, lassen sich die erfindungsgemäß behandelten Glasartikel durch die Kontaktwerkstoffe kontaktieren, wobei es bei geringen und üblichen Normallkräften, wie sie zum Beispiel dem Gewicht des Containers entsprechen, nicht zu Verletzungen der Glasoberfläche kommt. Polymere stellen hingegen als Kontaktwerkstoff für eine kritisch geformte Glasoberfläche eine geringere Gefahr für Oberflächenverletzungen dar, es kann aber bei Kontakt mit Polymeren zu einem Abrieb des Kunststoffes und damit auch Verunreinigungen der Oberfläche des Glasartikels kommen.

Die Erfindung wird im Folgenden anhand von Figuren und Ausführungsbeispielen näher dargestellt.

### Figuren

- Fig 1:: Gleitreibungskoeffizient µ von zwei Fiolax^{®}-Spritzen mit (Kurve 2) und ohne (Kurve 1) Anwendung des erfindungsgemäßen Verfahrens
- Fig 2:: Schematische Darstellung einer Vorrichtung zur Durchführung des zweiten Prozessschrittes B

### Ausführungsbeispiele

Aus Neutralglasrohren der Marke Fiolax^{®} - einem Typ I Neutralglas der Anmelderin - mit einem Außendurchmesser von 10,85 mm und einer Wandstärke von 1,1 mm wurden in einem üblichen Konvertierungsprozess Spritzen hergestellt und anschließend in einem Kühlofen spannungsfrei bzw. spannungsarm getempert. Die Spritzen wiesen in der Mitte einen zylindrischen Abschnitt entsprechend dem Ausgangsrohr auf, sowie an dem proximalen Enden einen Flansch und an dem distalen Ende einen Spritzenkonus. Bei dem Temperprozess wurden die Spritzen für ungefähr 15 Minuten auf eine Temperatur von 600°C aufgeheizt und sodann auf Raumtemperatur von ungefähr 20 °C abgekühlt. Eine Teilmenge der Spritzen wurde am Ende des Kühlbandes entnommen und bei einer Temperatur von 60°C wurde die gesamte Oberfläche mit water for injection (WFI) besprüht. Für den Sprühvorgang wurde ein mit WFI gefülltes Minimalmengensprühsystem verwendet, welches innerhalb einer Sprühdauer von 2 s über eine Zerstäuberdüse eine Wassermenge von ungefähr 0,02 ml abgab. Die Spritze wurde in diesem Zeitraum entlang der Zylinderachse um 360° gedreht, um eine gleichmäßige Benetzung auf der gesamten Oberfläche zu gewährleisten. Die Spritze wurde dabei auf einer manuell bedienbaren, drehbaren Halterung gehalten, welche den Spritzenkörper an der Innenoberfläche hielt und somit wurde Kontakt von Fremdmaterial an der äußeren Oberfläche vermieden. Nach einem kurzen Trocknen wurde der Gleitreibungskoeffizient µ gemäß dem beschriebenen Verfahren bestimmt, wobei zwei gleichartige zylindrische Spritzenkörper mit ihren zylindrischen mittleren Abschnitten mit einer Geschwindigkeit von jeweils 10 mm/min bei konstanter Anpresskraft F_{N} von 0,5 N über eine Länge von 15 mm gegeneinander gerieben wurden. Die Messung wurde nach 4h, 24h, 72h und 240h wiederholt, wobei die Spritzencharge zwischen den Messungen unter normalen Umgebungsbedingungen (20 - 25°C, 40 - 60 % relative Feuchte) gelagert worden sind.

Für eine Vergleichsmessung wurde eine Teilmenge der Glasspritzen bei sonst identischer Herstellung am Kühlbandende nicht mit WFI behandelt. Für diese Spritzen wurde der Gleitreibungskoeffizient µ ausgehend von einem Zeitpunkt t = 0 nach der Kühlung im Kühlbandende nach 0 h und 240 h bestimmt.

Die Ergebnisse der Messungen sind in Figur 1 dargestellt, wobei die Kurve 1 den Gleitreibungskoeffizienten für die unbehandelte Charge von Glasspritzen darstellt und die Kurve 2 den Gleitreibungskoeffizienten für die erfindungsgemäß behandelte Charge darstellt. Die unbehandelten Spritzen wiesen nach dem Kühlofen einen sehr hohen Gleitreibungskoeffizienten µ von 0,82 +/- 0,03 auf, nach 240 h einen immer noch sehr hohen Gleitreibungskoeffizienten µ von 0,75 +/- 0,09. Sowohl bei der 0 h - Messung als auch bei der 240 h - Messung führte die Durchführung der Gleitreibungsmessung zu starken Beschädigungen der Glasoberfläche in beiden Spritzen.

Die erfindungsgemäß behandelten Spritzen wiesen hingegen direkt nach der erfindungsgemäßen Behandlung einen Gleitreibungskoeffizienten von 0,42 +/- 0,21 auf, was gegenüber der unbehandelten Vergleichscharge einer Reduzierung des Gleitreibungskoeffizienten µ um etwa 50 % entspricht. Auch nach 4 h, 24 h und 72 h wurden deutlich reduzierte Werte des Gleitreibungskoeffizienten µ gemessen. Interessanterweise wurde jedoch festgestellt, dass die Gleitreibungskoeffizienten µ nach der erfindungsgemäßen Behandlung wieder höher lagen als es direkt nach der erfindungsgemäßen Behandlung. Auffällig war weiterhin, dass die erfindungsgemäß behandelten Spritzen aufgrund der Durchführung der Gleitreibungsmessung kaum Beschädigungen der Glasoberfläche aufwiesen.

Mit dem erfindungsgemäßen Verfahren wurde die empfindliche Oberfläche von Glasspritzen also in ihren Gleiteigenschaften deutlich verbessert, so dass es bei einem Glas-Glas-Kontakt mit gleichartigen Spritzen zu einer deutlichen Reduzierung von Oberflächenbeschädigungen gekommen ist.

Generell wurde festgestellt, dass bei dem verwendeten Messaufbau und den eingestellten Parametern eine Kratzerbildung durch Glas-Glaskontakt unterhalb der Schwelle von µ = 0,5 vermieden wird. Dieser Wert kann daher als angestrebter Maximalwert für den Gleitreibungskoeffizienten angenommen werden.

Das erfindungsgemäße Verfahren weist zahlreiche Vorteile auf.

Die hohe Empfindlichkeit der Glasoberfläche gegenüber Oberflächenschädigungen kann schnell und nachhaltig reduziert werden. Eine Zwischenlagerung von Spritzen nach der Herstellung kann vermieden werden, die Spritzen können daher direkt weiterverarbeitet werden. Die Ablagerung von undefinierter Organik/Partikel/Staub/Schmutz durch eine Zwischenlagerung wird verhindert. Die Witterung und Lagerkonditionen (Luftfeuchte, Umgebungstemperatur, Partikelgehalt in der Luft, Luftaustauschbedingungen) haben keinen Einfluss mehr auf die Oberflächeneigenschaften der Produkte. Während der Weiterverarbeitung und durch die Definition eines gleichbleibenden Oberflächenzustandes wird der Ausschuss reduziert. Die Gefahr von Kratzern oder Bruch des Glases sinkt mit einhergehend verminderten Partikelzahlen am Produkt. Es werden keine schädlichen Stoffe oder aus pharmazeutischer Sicht bedenklichen Stoffe in Kontakt mit der Spritze gebracht. Aufgrund der deutlich reduzierten Neigung der Glasoberflächen zu Kratzern, Rissen und Checks wird auch die Bildung von Glaspartikeln reduziert. Damit bleibt eine Glasoberfläche gewährleistet, die frei von Fremdpartikeln ist.

Die Verringerung der Gleitreibung des Glases führt zu einer deutlichen Verbesserung der Prozessierbarkeit auf Weiterverarbeitungslinien, da nicht nur die Gefahr von kosmetischen Defekten durch Werkzeugkontakt verringert wird, sondern auch z.B. automatisiertes und manuelles Aufnehmen und gleitendes Transportieren durch geringen Gleitreibungswiderstand erleichtert wird.

## Patentansprüche

1. Verfahren zur Herstellung eines Glasartikels, umfassend in dieser Reihenfolge einen ersten Prozessschritt A, bei welchem eine Oberfläche des Glasartikels zumindest zeitweise eine Temperatur von wenigstens 400°C aufweist,
einen zweiten Prozessschritt B, wobei die Oberfläche des Glasartikels eine Temperatur von mehr als 5°C und weniger als 100°C aufweist und die Oberfläche mit Wasser oder Wasserdampf beaufschlagt wird und wobei der Oberfläche des Glasartikels eine Wassermenge zugeführt wird, welche einer Wasserschichtdicke von 1 bis 100 µm entspricht,
und einen dritten Prozessschritt C, wobei der Glasartikel unter Kontakt der Oberfläche mit Fremdmaterialien oder anderen Glasartikeln weiterverarbeitet wird.

2. Verfahren nach Anspruch 1, wobei die Oberfläche des Glasartikels im zweiten Prozessschritt B eine Temperatur von weniger als 60°C aufweist.

3. Verfahren nach einem der vorhergehenden Ansprüche, wobei die Beaufschlagung der Oberfläche mit Wasser oder Wasserdampf über einen Zeitraum von weniger als 60 s, bevorzugt weniger als 10 s und besonders bevorzugt 0,1 bis 2 s erfolgt.

4. Verfahren nach einem der vorhergehenden Ansprüche, wobei der dritte Prozessschritt C innerhalb von 4 Stunden, bevorzugt innerhalb von einer Stunde und besonders bevorzugt innerhalb von weniger als 10 Minuten nach Abschluss des zweiten Prozessschrittes B erfolgt.

5. Verfahren nach einem der vorhergehenden Ansprüche, wobei der Gleitreibungskoeffizient µ der Oberfläche vor dem zweiten Prozessschritt B einen Wert µ₁ und direkt nach dem zweiten Prozessschritt einen Wert µ₂ aufweist und wobei gilt: (µ₁ - µ₂)/µ₁ > 0,1, bevorzugt (µ₁ - µ₂)/µ₁ > 0,2 und mehr bevorzugt (µ₁ - µ₂)/µ₁ > 0,3.

6. Verfahren nach einem der vorhergehenden Ansprüche, wobei die chemische Veränderung des Glasartikels nach dem zweiten Prozessschritt B auf eine Oberflächenschicht einer Dicke von < 50 nm, bevorzugt < 10 nm beschränkt ist.

7. Verfahren nach einem der vorhergehenden Ansprüche, wobei der zweite Prozessschritt B nicht zu chemischen Veränderungen in einer tiefergelegenen Schicht des Glasartikels führt, welche sich von einem Abstand von 50 nm unterhalb der Glasoberfläche in den Glasartikel hinein erstreckt.

8. Verfahren nach einem der vorhergehenden Ansprüche, wobei die Veränderungen der Oberfläche durch den zweiten Prozessschritt B durch Tempern im Kühlofen bei 400°C rückgängig gemacht werden kann.

9. Verfahren nach einem der vorhergehenden Ansprüche, wobei im zweiten Prozessschritt die Oberfläche ausschließlich mit Wasser oder Wasserdampf beaufschlagt wird, bevorzugt mit destilliertem Wasser oder WFI.

10. Verfahren nach einem der vorhergehenden Ansprüche, wobei der Oberfläche des Glasartikels eine Wassermenge zugeführt wird, welche einer Wasserschichtdicke von 5 bis 50 µm und bevorzugt 10 bis 30 µm entspricht.

11. Verfahren nach einem der vorhergehenden Ansprüche, wobei die Beaufschlagung mit Wasser oder einem Luft-Wassergemisch mittels Aufsprühen erfolgt oder wobei die Beaufschlagung mit Wasserdampf mit feuchter, warmer Luft erfolgt, welche eine höhere Temperatur als der Glasartikel aufweist.

12. Verfahren nach einem der vorhergehenden Ansprüche, wobei die Beaufschlagung mit Wasser oder Wasserdampf durch Beaufschlagung mit zerstäubtem Wasser erfolgt, bevorzugt mit Hilfe eines Ultraschall-Zerstäubers.

13. Verfahren nach einem der vorhergehenden Ansprüche, wobei der Glasartikel ein Hohlkörper ist, bevorzugt ein Hohlkörper aus einem Borosilikatglas vom Typ I oder Typ II gemäß der European Pharmacopeia 8.4, Abschnitt 3.2.1, oder ein Alumosilikatglas, welches einen Al₂O₃-Gehalt im Bereich von 8 bis 23 wt-% aufweist.

14. Verfahren nach einem der vorhergehenden Ansprüche, wobei der Glasartikel eine Pharmaprimärverpackung ist, und bevorzugt ein Fläschchen, eine Spritze, eine Karpule oder eine Ampulle ist.

15. Verfahren nach einem der vorhergehenden Ansprüche, wobei im dritten Prozessschritt C die Fremdmaterialien oder anderen Glasartikel im Kontaktierungsbereich mit der Oberfläche des Glasartikels Metall, Glas, Polymere oder keramische Werkstoffe umfassen.

## Claims

1. Process for producing a glass article, comprising, in this order, a first process step A in which a surface of the glass article has a temperature of at least 400°C for at least some of the time,
a second process step B wherein the surface of the glass article has a temperature of more than 5°C and less than 100°C and the surface is brought into contact with water or water vapor and wherein the surface of the glass article is supplied with an amount of water which corresponds to a water layer thickness of from 1 to 100 µm,
and a third process step C wherein the glass article is processed further with contact of the surface with foreign materials or other glass articles.

2. Process according to Claim 1, wherein the surface of the glass article has a temperature of less than 60°C in the second process step B.

3. Process according to either of the preceding claims, wherein the contacting of the surface with water or water vapor is carried out for a period of time of less than 60 s, preferably less than 10 s and particularly preferably from 0.1 to 2 s.

4. Process according to any of the preceding claims, wherein the third process step C is carried out within 4 hours, preferably within one hour and particularly preferably within less than 10 minutes, after conclusion of the second process step B.

5. Process according to any of the preceding claims, wherein the coefficient of sliding friction µ of the surface before the second process step B has a value µ₁ and directly after the second process step has a value µ₂, where: (µ₁ - µ₂) /µ₁ > 0.1, preferably (µ₁ - µ₂) /µ₁ > 0.2 and more preferably (µ₁ - µ₂) /µ₁ > 0.3.

6. Process according to any of the preceding claims, wherein the chemical change in the glass article after the second process step B is limited to a surface layer having a thickness of < 50 nm, preferably < 10 nm.

7. Process according to any of the preceding claims, wherein the second process step B does not lead to chemical changes in a layer of the glass article which is located deeper down and extends from a distance of 50 nm underneath the glass surface into the glass article.

8. Process according to any of the preceding claims, wherein the changes in the surface resulting from the second process step B can be reversed by heat treatment at 400°C in the cooling oven.

9. Process according to any of the preceding claims, wherein the surface is contacted exclusively with water or water vapor, preferably with distilled water or WFI, in the second process step.

10. Process according to any of the preceding claims, wherein the surface of the glass article is supplied with an amount of water which corresponds to a water layer thickness of from 5 to 50 µm and preferably from 10 to 30 µm.

11. Process according to any of the preceding claims, wherein the contacting with water or an air/water mixture is carried out by spraying-on or wherein the contacting with water vapor is carried out using humid, warm air which has a higher temperature than the glass article.

12. Process according to any of the preceding claims, wherein the contacting with water or water vapor is carried out by contacting with atomized water, preferably by means of an ultrasonic atomizer.

13. Process according to any of the preceding claims, wherein the glass article is a hollow body, preferably a hollow body composed of a borosilicate glass of type I or type II according to the European Pharmacopeia 8.4, section 3.2.1, or an aluminosilicate glass which has an Al₂O₃ content in the range from 8 to 23% by weight.

14. Process according to any of the preceding claims, wherein the glass article is an item of pharmaceutical primary packaging and is preferably a vial, a syringe, a cartridge or an ampoule.

15. Process according to any of the preceding claims, wherein the foreign materials or other glass articles in the region of contact with the surface of the glass article in the third process step C comprise metal, glass, polymers or ceramic materials.

## Revendications

1. Procédé de fabrication d'un article en verre, comprenant dans cet ordre une première étape de traitement A, lors de laquelle une surface de l'article en verre présente au moins temporairement une température d'au moins 400 °C,
une deuxième étape de traitement B, la surface de l'article en verre présentant une température de plus de 5 °C et de moins de 100 °C et la surface étant sollicitée avec de l'eau ou de la vapeur d'eau, et une quantité d'eau qui correspond à une épaisseur de couche d'eau de 1 à 100 µm étant amenée à la surface de l'article en verre,
et une troisième étape de traitement C, l'article en verre étant transformé en mettant la surface en contact avec des matériaux étrangers ou d'autres articles en verre.

2. Procédé selon la revendication 1, la surface de l'article en verre présentant une température de moins de 60 °C lors de la deuxième étape de traitement B.

3. Procédé selon l'une quelconque des revendications précédentes, la sollicitation de la surface avec l'eau ou de la vapeur d'eau s'effectuant sur une période de temps de moins de 60 s, de préférence de moins de 10 s et de manière particulièrement préférée de 0,1 à 2 s.

4. Procédé selon l'une quelconque des revendications précédentes, la troisième étape de traitement C s'effectuant dans les limites de 4 heures, de préférence dans les limites d'une heure et de manière particulièrement préférée dans les limites de moins de 10 minutes après la fin de la deuxième étape de traitement B.

5. Procédé selon l'une quelconque des revendications précédentes, le coefficient de frottement de glissement µ de la surface présentant une valeur µ₁ avant la deuxième étape de traitement B et une valeur µ₂ directement après la deuxième étape de traitement, avec : (µ₁ - µ₂) /µ₁ > 0,1, de préférence (µ₁ - µ₂)/µ₁ > 0,2 et de manière davantage préférée (µ₁ - µ₂)/µ₁ > 0,3.

6. Procédé selon l'une quelconque des revendications précédentes, la modification chimique de l'article en verre après la deuxième étape de traitement B étant limitée à une couche de surface d'une épaisseur < 50 nm, de préférence < 10 nm.

7. Procédé selon l'une quelconque des revendications précédentes, la deuxième étape de traitement B ne conduisant pas à des modifications chimiques dans une couche plus profonde de l'article en verre, qui s'étend dans l'article en verre à partir d'une distance de 50 nm en dessous de la surface en verre.

8. Procédé selon l'une quelconque des revendications précédentes, les modifications de la surface par la deuxième étape de traitement B peuvent être annulées par recuit dans un four de refroidissement à 400 °C.

9. Procédé selon l'une quelconque des revendications précédentes, lors de la deuxième étape de traitement, la surface étant sollicitée exclusivement avec de l'eau ou de la vapeur d'eau, de préférence avec de l'eau distillée ou de l'eau pour injections (WFI).

10. Procédé selon l'une quelconque des revendications précédentes, une quantité d'eau qui correspond à une épaisseur de couche d'eau de 5 à 50 µm et de préférence de 10 à 30 µm étant amenée à la surface de l'article en verre.

11. Procédé selon l'une quelconque des revendications précédentes, la sollicitation avec de l'eau ou un mélange d'air et d'eau s'effectuant au moyen d'une pulvérisation ou la sollicitation avec de la vapeur d'eau s'effectuant avec de l'air chaud humide, qui présente une température plus élevée que l'article en verre.

12. Procédé selon l'une quelconque des revendications précédentes, la sollicitation avec de l'eau ou de la vapeur d'eau s'effectuant par sollicitation avec de l'eau atomisée, de préférence à l'aide d'un atomiseur à ultrasons.

13. Procédé selon l'une quelconque des revendications précédentes, l'article en verre étant un corps creux, de préférence un corps creux en verre borosilicaté de type I ou de type II selon la Pharmacopée européenne 8.4, section 3.2.1, ou un verre aluminosilicaté qui présente une teneur en Al₂O₃ dans la plage allant de 8 à 23 % en poids.

14. Procédé selon l'une quelconque des revendications précédentes, l'article en verre étant un emballage primaire pharmaceutique, et étant de préférence un flacon, une seringue, une carpule ou une ampoule.

15. Procédé selon l'une quelconque des revendications précédentes, dans la troisième étape de traitement C, les matériaux étrangers ou autres articles en verre comprenant dans la zone de contact avec la surface de l'article en verre du métal, du verre, des polymères ou des matériaux céramiques.
